# EUROPÄISCHE PATENTANMELDUNG

(11) **EP 4 575 296 A1**
(43) Veröffentlichungstag der Anmeldung: **25.06.2025**
(21) Anmeldenummer: 24215462.3
(22) Anmeldetag: 26.11.2024
(51) Int. Cl.: F16L 33/30, D06F 39/08, F16K 15/00, F16L 55/10, F25B 30/00

(54) **HYDRAULIKANSCHLUSS FÜR EINE WÄRMEPUMPE**

(30) Priorität: 20.12.2023 DE 102023136087
(71) Anmelder: Stiebel Eltron GmbH & Co. KG, 37603 Holzminden (DE)
(72) Erfinder: Müller, Johanna Dorothea, 33100 Paderborn (DE); SCHULZE, Hendrik, 37586 Dassel (DE); Kirchhoff, Hartmut, 37671 Höxter (DE)

(57) **Zusammenfassung**

Die Erfindung bezieht sich auf einen Hydraulikanschluss 100,300,400 für eine Wärmepumpe, wobei der Hydraulikanschluss aufweist, ein Rohrstück 110,310,410 zum Durchleiten eines Fluids, wobei das Rohrstück eine erste Öffnung 111,311,411 und eine zweite Öffnung 112,312,412 aufweist, einen ersten Anschluss 120,320,420, der die erste Öffnung umgibt, zum Verbinden mit einem ersten Gegenanschluss, einen zweiten Anschluss 130,330,430, der die zweite Öffnung umgibt, zum Verbinden mit einem zweiten Gegenanschluss, einen Anschlag 140,340,440, der das Rohrstück umgibt, wobei der Anschlag zwischen dem ersten Anschluss und dem zweiten Anschluss angeordnet ist, und eine Nut 113,313,413, die umlaufend an einer Innenwand des Rohrstücks angeordnet ist, wobei der Hydraulikanschluss ausgestaltet ist, im Rohrstück einen Rückflussverhinderer 200 aufzunehmen, so dass die Nut zumindest einen Teil des Rückflussverhinderers umgreift. Die Erfindung bezieht sich zudem auf eine Wärmepumpe mit einer Gerätewand, wobei in die Gerätewand wenigstens ein, bevorzugt zwei Hydraulikanschlüsse angeordnet sind.

## Beschreibung

Die vorliegende Erfindung betrifft das Gebiet von Wärmepumpen und insbesondere einen Hydraulikanschluss für eine Wärmepumpe und eine Wärmepumpe mit wenigstens einem Hydraulikanschluss.

Wärmepumpen haben heutzutage viele Anwendungsbereiche, insbesondere werden sie auch für den privaten Gebrauch eingesetzt.

Die Installation von Wärmepumpen ist normalerweise komplex und wird deshalb von extra geschultem Fachpersonal durchgeführt. Sie umfasst auch ein Anschließen von Wasserleitungen an die Wärmepumpe. Dabei muss ein gewisser Sicherheitsstandard gewährleistet werden, der insbesondere unabhängig vom Können des Fachpersonals gehalten werden soll.

Es besteht somit ein Bedarf, die Installation der Wärmepumpe, insbesondere der Wasserleitungen an die Wärmepumpe, so einfach wie möglich zu halten, um einen gewissen Sicherheitsstandard zu gewährleisten. Zudem soll ein entsprechender Anschluss für die Wasserleitungen einer gewissen Belastung, d.h. Kraft- und Drehmomentbelastung, standhalten können.

Zusätzlich sollen ggf. auch weitere Sicherheitsstandards erfüllt werden, die zum Beispiel bei Wärmepumpen mit einem brennbaren Kältemittel berücksichtigt werden müssen, um zu verhindern, dass das brennbare Kältemittel aus dem Kreislauf austreten kann und damit eine Gefahrenquelle bildet.

Ein der vorliegenden Erfindung zugrundeliegendes Ziel ist es deshalb, die Installation von Wärmepumpen unter hohen Sicherheitsstandards zu ermöglichen und zu vereinfachen.

Erfindungsgemäß wird nach einem ersten Aspekt ein Hydraulikanschluss für eine Wärmepumpe vorgeschlagen, wie er in Anspruch 1 definiert ist, wobei der Hydraulikanschluss aufweist, (i) ein Rohrstück zum Durchleiten eines Fluids, wobei das Rohrstück eine erste Öffnung und eine zweite Öffnung aufweist, (ii) einen ersten Anschluss, der die erste Öffnung umgibt, zum Verbinden mit einem ersten Gegenanschluss, (iii) einen zweiten Anschluss, der die zweite Öffnung umgibt, zum Verbinden mit einem zweiten Gegenanschluss, (iv) einen Anschlag, derdas Rohrstück umgibt, wobei der Anschlag zwischen dem ersten Anschluss und dem zweiten Anschluss angeordnet ist, und (v) eine Nut, die umlaufend an einer Innenwand des Rohrstücks angeordnet ist, wobei der Hydraulikanschluss ausgestaltet ist, im Rohrstück einen Rückflussverhinderer aufzunehmen, so dass die Nut zumindest einen Teil des Rückflussverhinderers umgreift.

Erfindungsgemäß wird nach einem zweiten Aspekt eine Wärmepumpe mit einer Gerätewand vorgeschlagen, wobei in der Gerätewand wenigstens ein Hydraulikanschluss, bevorzugt zwei oder drei Hydraulikanschlüsse, nach einer der oben oder unten beschriebenen Ausführungsformen angeordnet ist/sind.

Ein Teil des Hintergrunds der vorliegenden Erfindung findet sich in den folgenden Überlegungen.

Der erfindungsgemäße Hydraulikanschluss ist zur Verwendung einer außen- oder innenaufgestellten Wärmepumpe vorgesehen und eingerichtet. Er kann aber auch anderweitig verwendet werden, wenn die von dem Hydraulikanschluss hervorgerufenen Vorteile genutzt werden sollen.

Insbesondere ist der Hydraulikanschluss zum Verbinden von Wasserleitungen, zum Beispiel eines Gebäudes, mit der Wärmepumpe vorgesehen und eingerichtet. Dabei ermöglicht der erfindungsgemäße Hydraulikanschluss einen festen Sitz in einer entsprechenden Gerätewand der Wärmepumpe und somit ein einfaches Anschließen der Wasserleitungen an die Wärmepumpe.

Außerdem kann der erfindungsgemäße Hydraulikanschluss im Vorlauf und im Rücklauf der Wärmepumpe eingesetzt werden, wobei im Rücklauf dann ein Rückflussverhinderer eingesetzt sein kann. Durch die Verwendung zwei gleicher Hydraulikanschlüsse mit unterschiedlichen Funktionen kann die Handhabbarkeit weiter vereinfacht werden.

In einer vorteilhaften Ausgestaltung eines Aspekts der Erfindung ist innerhalb des Rohrstücks ein Rückflussverhinderer angeordnet, wobei der Rückflussverhinderer wenigstens ein Rastmittel aufweist, wobei die Nut zumindest das Rastmittel umgreift. Das Rastmittel des Rückflussverhinderers ist somit ausgestaltet, zumindest teilweise in die Nut zu greifen. Weiter ist der Rückflussverhinderer ausgestaltet, einen Volumenstrom in eine erste Richtung, besonders bevorzugt von der ersten Öffnung in Richtung der zweiten Öffnung, zu ermöglichen und einen Volumenstrom in eine der ersten Richtung entgegengesetzten zweiten Richtung, besonders bevorzugt von der zweiten Öffnung in Richtung der ersten Öffnung, zu verhindern.

Ein eingebauter Rückflussverhinderer verhindert in einem Fall, in dem der Hydraulikanschluss zum Beispiel in einer Wärmepumpe eingebaut ist und die Wärmepumpe abgeschaltet ist, ein Rückströmen des Wassers aus der Wärmepumpe.

Der Rückflussverhinderer umfasst vorzugsweise ein Ventil. Insbesondere ist der Rückflussverhinderer bevorzugt ausgestaltet, auf Druck auf das Ventil, der zum Beispiel durch ein Werkzeug ausgeübt werden kann, zu öffnen.

In einer bevorzugten Ausführungsform weist der Anschlag auf einer dem zweiten Anschluss zugewandten Seite um das Rohrstück einen Vorsprung auf, der in einer Ebene senkrecht zu einer Durchleitrichtung des Rohrstücks eine mehreckige, bevorzugt sechseckige, Form aufweist. D.h. der Vorsprung steht entlang der Durchleitrichtung des Rohrstücks vor. Ein derartiger Vorsprung ermöglicht einen Formschluss mit einer entsprechenden Öffnung, zum Beispiel einer Außenwand einer Wärmepumpe, und damit ein gerichtetes Einbauen, d.h. eine definierte Positionierung, des Hydraulikanschlusses, zum Beispiel in der Außenwand der Wärmepumpe. Zudem ermöglicht ein derartiger Vorsprung eine Verdrehsicherung, zum Beispiel in einem Fall, in dem zur Verbindung eines Schlauches, Rohr oder Ähnlichem an den Hydraulikanschluss ein Drehverschluss verwendet wird.

In einer weiteren bevorzugten Ausführungsform umfasst der Hydraulikanschluss auf einer dem zweiten Anschluss zugewandten Seite um das Rohrstück eine Überwurfmutter, die in einer Durchleitrichtung des Rohrstücks bewegbar angeordnet ist. Insbesondere ist die Überwurfmutter verschiebbar oder verdrehbar angeordnet. Ist der Hydraulikanschluss in einer Gerätewand angeordnet und liegt der Hydraulikanschluss an einer Außenseite der Gerätewand mit dem Anschlag an, kann die Überwurfmutter von einer Innenseite der Gertewand den Hydraulikanschluss an der Gerätewand halten bzw. gegen die Gerätewand fixieren. Dies führt zu einem festen Sitz des Hydraulikanschlusses in/an der Gerätewand, der insbesondere stabil ist gegenüber einem Anschließen von Wasserleitungen an den Hydraulikanschlüssen, d.h. auf Kraft belastbar.

Zusätzlich oder alternativ zu einer Überwurfmutter umfasst der Hydraulikanschluss auf einer dem zweiten Anschluss zugewandten Seite des Anschlags um das Rohrstück vorzugsweise wenigstens eine, besonders bevorzugt wenigstens drei, Bohrungen. In die Bohrungen können Buchsen eingebracht werden, um eine hohe Lebensdauer der Verschraubung zu gewährlisten. Bei einer reinen Verschraubung in den Kunststoff könnte sich die Verbindung wieder lösen. Insbesondere weist dann eine Gerätewand entsprechende Öffnungen zum Durchführen von Befestigungsmitteln, wie zum Beispiel Schrauben, auf.

In einer weiteren vorteilhaften Ausgestaltung weist der Anschlag eine weitere Nut auf einer dem zweiten Anschluss zugewandten Seite auf, wobei zumindest teilweise in der weiteren Nut eine Dichtung angeordnet ist. Dies ermöglicht einen dichten Sitz des Hydraulikanschlusses an der Gerätewand, so dass durch die Öffnung in der Gerätewand, die für die Anschlüsse mit den Wasserleitungen notwendig sind, keine Undichtigkeit hervorgerufen wird. Dies ist insbesondere dann wichtig, wen ein Gehäuse der Wärmepumpe als Sicherheitsmaßnahme bei brennbarem Kältemittel dicht, d.h. nach außen abgedichtet, vorgesehen ist. Bevorzugt umfasst die Dichtung einen O-Ring.

In einer weiteren vorteilhaften Ausgestaltung weist der erste Anschluss einen Steckanschluss auf. Der Steckanschluss ist bevorzugt ein VDA-Anschluss. Zusätzlich oder alternativ kann der erste Anschluss einen Klemmanschluss aufweisen, der ausgestaltet ist, mit einem Rohr, insbesondere einem Kupferrohr, verbunden zu werden.

Weiter zusätzlich oder alternativ kann auch der zweite Anschluss einen Steckanschluss, bevorzugt einen VDA-Anschluss oder einen Schlauchanschluss, aufweisen. Der erste Anschluss und der zweite Anschluss können demnach gleich ausgestaltet sein oder verschieden ausgestaltet sein.

Der erfindungsgemäße Hydraulikanschluss kann aus einem Material bestehen oder aus mehreren Materialien bestehen. Beispielsweise ist der Hydraulikanschluss vollständig, oder zumindest teilweise, aus Kupfer. Alternativ kann der Hydraulikanschluss vollständig, oder zumindest teilweise, aus Kunststoff sein. Bevorzugt wird der Grundkörper des Hydraulikanschlusses durch ein Einkomponentenspritzgussverfahren hergestellt.

Die Erfindung bezieht sich auch auf eine Wärmepumpe mit einer Gerätewand, wobei in der Gerätewand wenigstens ein Hydraulikanschluss nach einer der obigen oder unten beschriebenen Ausführungsformen angeordnet ist. Bevorzugt sind in einer Gerätewand, d.h. pro Wärmepumpe, zwei Hydraulikanschlüsse vorgesehen. Weiter bevorzugt ist der erste Anschlag außerhalb der Wärmepumpe angeordnet.

In einer bevorzugten Ausführungsform liegt zwischen der Gerätewand und dem Hydraulikanschluss ein Formschluss und/oder Stoffschluss vor. Dies kann beispielsweise dadurch erreicht werden, dass der Hydraulikanschluss einen Vorsprung aufweist, der in einer Ebene senkrecht zu der Durchleitrichtung des Rohrstücks eine mehreckige, bevorzugt sechseckige, Form aufweist und die Gerätewand entsprechend eine mehreckige, bevorzugt sechseckige, Öffnung aufweist, in die der Vorsprung eingreift und mit der Öffnung, d.h. mit Rändern der Öffnung, einen Formschluss bildet.

In einer weiteren Ausführungsform weist die Wärmepumpe eine Hydraulik mit einer Nennweite auf. Dann ist es bevorzugt, dass ein Innendurchmesser des Rohrstücks im Bereich des zweiten Anschlusses größer ist als die Nennweite der Hydraulik.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels des erfindungsgemäßen Hydraulikanschlusses,
- Fig. 2: eine schematische Darstellung zur Illustration des ersten Ausführungsbeispiels des erfindungsgemäßen Hydraulikanschlusses aus einer anderen Perspektive,
- Fig. 3: eine schematische Schnittansicht zur Illustration des ersten Ausführungsbeispiels des erfindungsgemäßen Hydraulikanschlusses,
- Fig. 4a: eine schematische Darstellung zur Illustration eines Rückflussverhinderers zur Verwendung in einem erfindungsgemäßen Hydraulikanschluss,
- Fig. 4b: eine schematische Darstellung zur Illustration des Rückflussverhinderers zur Verwendung in einem erfindungsgemäßen Hydraulikanschluss aus einer anderen Perspektive,
- Fig. 5: eine schematische Darstellung zur Illustration des Rückflussverhinderers zur Verwendung in einem erfindungsgemäßen Hydraulikanschluss von der Seite,
- Fig. 6: eine schematische Darstellung zur Illustration des ersten Ausführungsbeispiels des erfindungsgemäßen Hydraulikanschlusses mit einem eingebauten Rückflussverhinderer,
- Fig. 7: eine vergrößerte schematische Darstellung zur Illustration der Nut in dem erfindungsgemäßen Hydraulikanschluss,
- Fig. 8: eine schematische Darstellung zur Illustration einer Außenwand einer Wärmepumpe mit zwei erfindungsgemäßen Hydraulikanschlüssen entsprechend dem ersten Ausführungsbeispiel,
- Fig. 9: eine schematische Schnittansicht zur Illustration eines zweiten Ausführungsbeispiels des erfindungsgemäßen Hydraulikanschlusses mit einem eingebauten Rückflussverhinderer,
- Fig. 10a: eine schematische Darstellung zur Illustration des zweiten Ausführungsbeispiels des erfindungsgemäßen Hydraulikanschlusses,
- Fig. 10b: eine schematische Darstellung zur Illustration des zweiten Ausführungsbeispiels des erfindungsgemäßen Hydraulikanschlusses aus einer anderen Perspektive,
- Fig. 11: eine schematische Darstellung zur Illustration einer Außenwand einer Wärmepumpe mit zwei erfindungsgemäßen Hydraulikanschlüssen entsprechend dem zweiten Ausführungsbeispiel,
- Fig. 12: eine schematische Darstellung zur Illustration der Außenwand einer Wärmepumpe mit zwei erfindungsgemäßen Hydraulikanschlüssen entsprechend dem zweiten Ausführungsbeispiel aus einer anderen Perspektive,
- Fig. 13: eine schematische Darstellung zur Illustration der Außenwand einer Wärmepumpe mit zwei erfindungsgemäßen Hydraulikanschlüssen entsprechend dem zweiten Ausführungsbeispiel aus einer wiederum anderen Perspektive, und
- Fig. 14: eine schematische Darstellung zur Illustration einer Außenwand einer Wärmepumpe mit zwei erfindungsgemäßen Hydraulikanschlüssen entsprechend einem dritten Ausführungsbeispiel,
- Fig. 15: eine schematische Darstellung zur Illustration eines dritten Ausführungsbeispiels des erfindungsgemäßen Hydraulikanschlusses,
- Fig. 16: eine schematische Schnittansicht zur Illustration des dritten Ausführungsbeispiels des erfindungsgemäßen Hydraulikanschlusses,
- Fig. 17: eine schematische Darstellung zur Illustration des dritten Ausführungsbeispiels des erfindungsgemäßen Hydraulikanschlusses von der Seite, und
- Fig. 18: eine weitere schematische Darstellung zur Illustration des dritten Ausführungsbeispiels des erfindungsgemäßen Hydraulikanschlusses.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

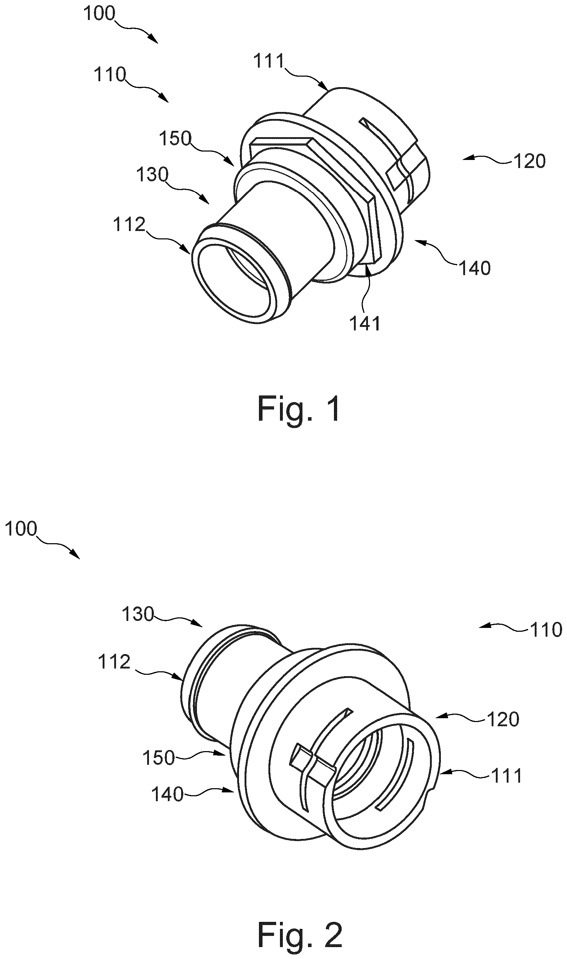

Fig. 1 zeigt eine schematische Darstellung zur Illustration eines ersten Ausführungsbeispiels des erfindungsgemäßen Hydraulikanschlusses 100. Der Hydraulikanschluss 100 ist für eine Wärmepumpe vorgesehen und eingerichtet.

Der Hydraulikanschluss 100 weist ein Rohrstück 110 auf, wobei das Rohrstück 110 zum Durchleiten eines Fluids, insbesondere Wasser, ausgestaltet ist. Das Rohrstück 110 weist eine erste Öffnung 111 und eine zweite Öffnung 112 auf.

Der Hydraulikanschluss 100 weist zudem einen ersten Anschluss 120 auf, der die erste Öffnung 111 umgibt. Der erste Anschluss 120 ist zum Verbinden mit einem ersten Gegenanschluss ausgestaltet. Insbesondere ist, wenn der Hydraulikanschluss 100 für eine Wärmepumpe genutzt wird, der erste Anschluss 120 außerhalb der Wärmepumpe angeordnet.

Der Hydraulikanschluss 100 weist zudem einen zweiten Anschluss 130 auf, der die zweite Öffnung 112 umgibt. Der zweite Anschluss 130 ist zum Verbinden mit einem zweiten Gegenanschluss ausgestaltet. Bei Verwendung in einer Wärmepumpe ist der zweite Anschluss 130 innerhalb der Wärmepumpe angeordnet.

Weiter weist der Hydraulikanschluss 100 einen Anschlag 140 auf, der das Rohrstück 110 umgibt, wobei der Anschlag 140 zwischen dem ersten Anschluss 120 und dem zweiten Anschluss 130 angeordnet ist.

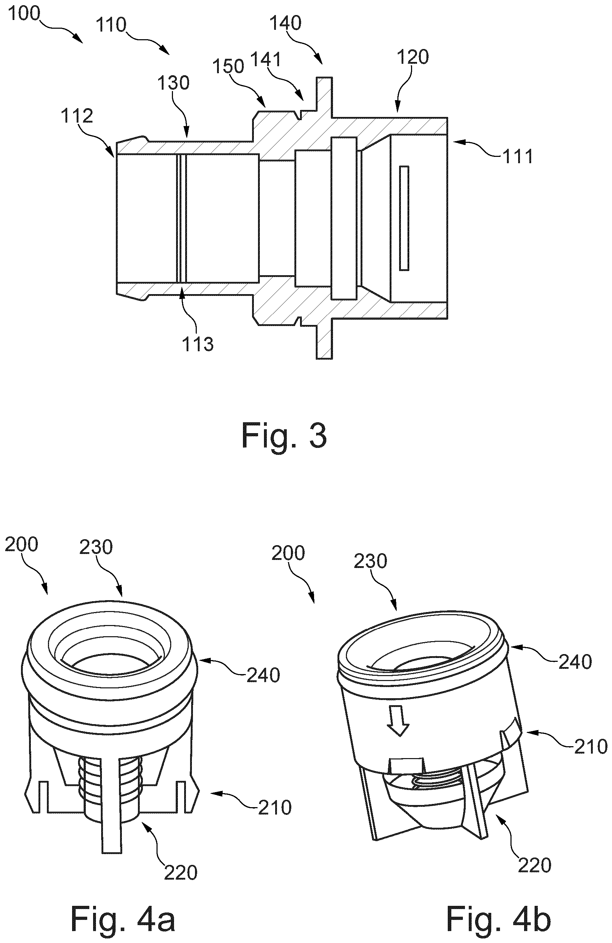

Außerdem weist der Hydraulikanschluss 100 eine Nut 113 auf, die umlaufend an einer Innenwand des Rohrstücks 110 angeordnet ist (s. Fig. 3). Der Hydraulikanschluss 100 ist ausgestaltet, im Rohrstück 110 einen Rückflussverhinderer (wird später beschrieben) aufzunehmen, so dass die Nut 113 zumindest einen Teil des Rückflussverhinderers umgreift.

Insbesondere ist innerhalb des Rohrstücks 110 ein Rückflussverhinderer angeordnet, wobei der Rückflussverhinderer wenigstens ein Rastmittel aufweist, wobei die Nut 113 zumindest das Rastmittel umgreift.

Der Anschlag 140 weist auf einer dem zweiten Anschluss 130 zugewandten Seite um das Rohrstück 110 einen Vorsprung 141 auf, der in einer Ebene senkrecht zu einer Durchleitrichtung des Rohrstücks 110 eine mehreckige, hier sechseckige, Form aufweist.

Zudem weist der Hydraulikanschluss 100 auf einer dem zweiten Anschluss 130 zugewandten Seite um das Rohrstück 110 eine Überwurfmutter 150 auf, die in einer Durchleitrichtung des Rohrstücks 110 bewegbar angeordnet ist.

Wird der Hydraulikanschluss 110 für eine Wärmepumpe mit einer Gerätewand genutzt, wird der Hydraulikanschluss 100 von außen durch die Gerätewand geschoben, bis der Hydraulikanschluss 100 mit dem Anschlag 140 an der Gerätewand anliegt und mit dem Vorsprung in die Gerätewand hineinragt. Mit der Überwurfmutter 150 kann der Hydraulikanschluss 100 an der Gerätewand fixiert werden.

Der Anschlag 140 kann eine weitere Nut auf einer dem zweiten Anschluss 130 zugewandten Seite aufweisen, in der zumindest teilweise eine Dichtung angeordnet werden kann. Die Dichtung ist vorzugsweise ein O-Ring.

Der erste Anschluss 120 ist in dieser Ausführungsform ein Steckanschluss, insbesondere ein VDA-Anschluss. Der zweite Anschluss 130 ist in der gezeigten Ausführungsform ein Schlauchanschluss.

In Fig. 1 ist die zweite Öffnung 112 bzw. der zweite Anschluss 130 in Richtung des Betrachters gerichtet.

Fig. 2 zeigt eine schematische Darstellung zur Illustration des ersten Ausführungsbeispiels des erfindungsgemäßen Hydraulikanschlusses 100 aus einer anderen Perspektive. Insbesondere ist in Fig. 2 die erste Öffnung 111 bzw. der erste Anschluss 120 in Richtung des Betrachters gerichtet.

Fig. 3 zeigt eine schematische Schnittansicht zur Illustration des ersten Ausführungsbeispiels des erfindungsgemäßen Hydraulikanschlusses 100. Insbesondere ist hier die Nut 113 zu erkennen, die umlaufend an einer Innenwand des Rohrstücks 110 angeordnet ist.

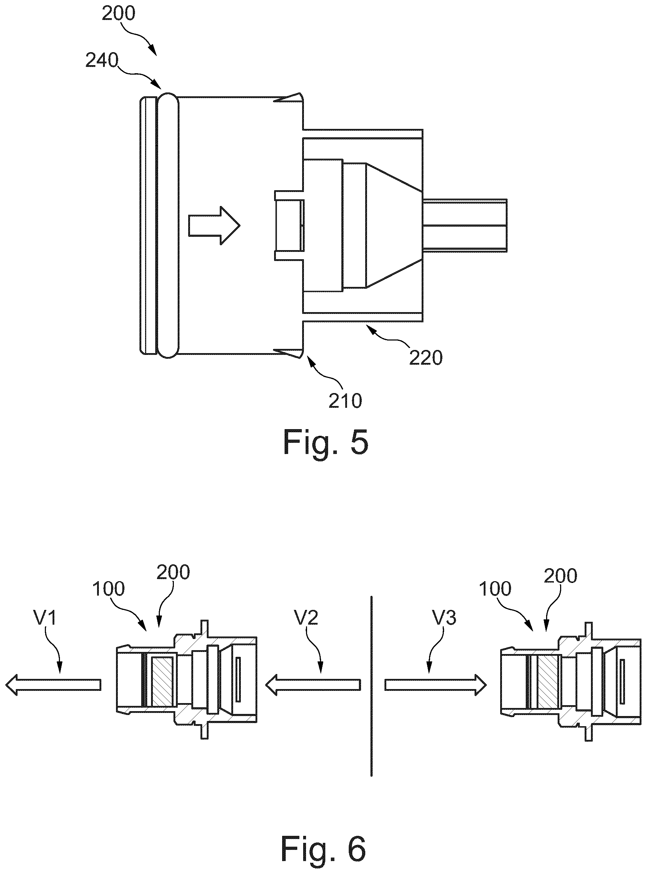

Fig. 4a zeigt eine schematische Darstellung zur Illustration eines Rückflussverhinderers zur Verwendung in einem erfindungsgemäßen Hydraulikanschluss. Fig. 4b zeigt eine schematische Darstellung zur Illustration des Rückflussverhinderers 200 zur Verwendung in einem erfindungsgemäßen Hydraulikanschluss aus einer anderen Perspektive. Fig. 5 zeigt eine schematische Darstellung zur Illustration des Rückflussverhinderers 200 zur Verwendung in einem erfindungsgemäßen Hydraulikanschluss von der Seite.

Der Rückflussverhinderer 200 kann dabei in dem Hydraulikanschluss 100 oder einem der unten beschriebenen Hydraulikanschlüsse verwendet werden.

Der Rückflussverhinderer 200 umfasst ein Ventil, das ein Fluid in eine Richtung durchlässt und das Fluid in die andere Richtung nicht durchlässt. Der Rückflussverhinderer 200 umfasst in der gezeigten Ausführungsform ein Rastmittel 210 zum Eingreifen in die Nut des Hydraulikanschlusses, zum Beispiel der Nut 113. Das Rastmittel 210 kann dabei am Ende des Rückflussverhinderers 200 angeordnet sein, wie in Fig. 4a gezeigt, oder mittig angeordnet sein, wie in Fig. 4b und Fig. 5 gezeigt.

Der Rückflussverhinderer 200 weist zudem eine Feder 220 auf, mit der eine Dichtfläche 230 in einer geschlossenen Position des Rückflussverhinderers 200 gehalten wird. Mechanisch kann der Rückflussverhinderer 200 geöffnet werden, indem entweder das Fluid auf die Dichtfläche 230 drückt oder die Dichtfläche 230 mit einem Werkzeug entgegen der Federkraft der Feder 220 gedrückt wird.

Der Rückflussverhinderer 200 umfasst außerdem einen Dichtungsring 240, der um den Rückflussverhinderer 200 angeordnet ist und den Rückflussverhinderer 200 gegen den Hydraulikanschluss, in dem der Rückflussverhinderer 200 eingebaut ist, abdichtet.

Fig. 6 zeigt eine schematische Darstellung zur Illustration des ersten Ausführungsbeispiels des erfindungsgemäßen Hydraulikanschlusses 100 mit einem eingebauten Rückflussverhinderer 200. Auf der linken Seite in Fig. 6 ist gezeigt, dass ein Fluid mit einer Geschwindigkeit V2 auf der rechten Seite des Hydraulikanschlusses in eine Durchlaufrichtung durch den Hydraulikanschluss 100 und den Rückflussverhinderer 200 auf die linke Seite des Hydraulikanschlusses 100 mit einer Geschwindigkeit V1 gelangt, d.h. von rechts nach links.

Auf der rechten Seite in Fig. 6 ist gezeigt, dass ein Fluid mit einer Geschwindigkeit V3 auf der linken Seite des Hydraulikanschlusses 100 nicht durch den Hydraulikanschluss 100 gelangt, da dies von dem Rückflussverhinderer verhindert wird.

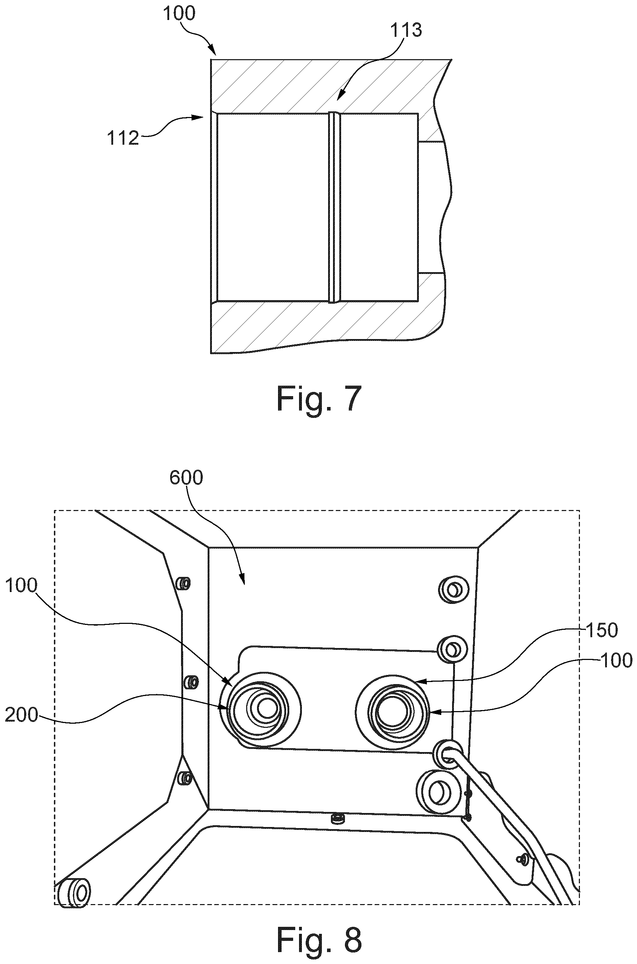

Fig. 7 zeigt eine vergrößerte schematische Darstellung zur Illustration der Nut 113 in dem erfindungsgemäßen Hydraulikanschluss 100. Insbesondere ist die Nut 113 umlaufend an einer Innenwand des Rohrstücks 110 angeordnet, so dass die Nut 113 zumindest einen Teil des Rückflussverhinderers 200 umgreift, wenn der Rückflussverhinderer 200 innerhalb des Rohrstücks 100 angeordnet ist.

Fig. 8 zeigt eine schematische Darstellung zur Illustration einer Gerätewand 600 mit zwei eingebauten Hydraulikanschlüssen 100. In dem linken Hydraulikanschluss 100 ist ein Rückflussverhinderer 200 eingebaut. Insbesondere ist zudem die Überwurfmutter 150 zu erkennen, die den Hydraulikanschluss 100 an der Gerätewand 600 fixiert. Die Gerätewand 600 ist insbesondere eine Gerätewand einer Wärmepumpe, wobei in Fig. 8 einen Blick von außen darstellt, dabei handelt es sich um eine Sicht, die das Servicepersonal bei der Installation sieht.

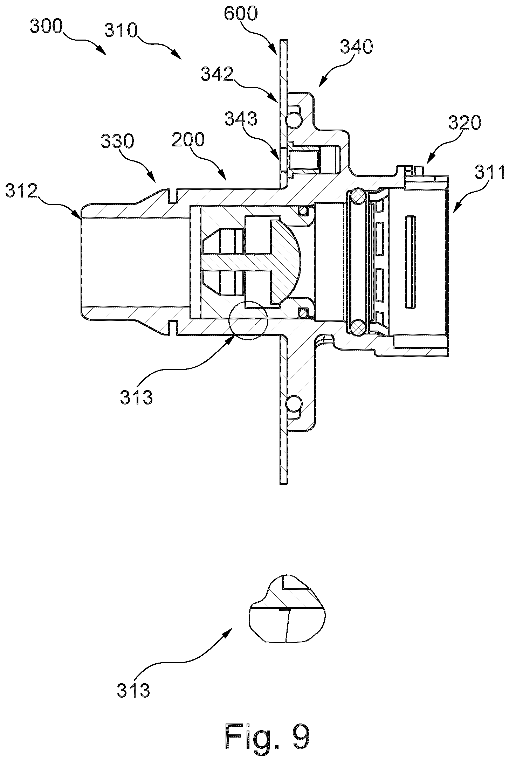

Fig. 9 zeigt eine schematische Schnittansicht zur Illustration eines zweiten Ausführungsbeispiels des erfindungsgemäßen Hydraulikanschlusses mit einem eingebauten Rückflussverhinderer. Der Hydraulikanschluss 300 weist ein Rohrstück 310 zum Durchleiten eines Fluids auf. Das Rohrstück 310 weist eine erste Öffnung 311 und eine zweite Öffnung 312 auf. Weiter umfasst der Hydraulikanschluss 310 einen ersten Anschluss 320, der die erste Öffnung 311 umgibt, zum Verbinden mit einem ersten Gegenanschluss und einen zweiten Anschluss 330, der die zweite Öffnung 312 umgibt, zum Verbinden mit einem zweiten Gegenanschluss.

Außerdem umfasst der Hydraulikanschluss 300 einen Anschlag 340, der das Rohrstück 310 umgibt, wobei der Anschlag 340 zwischen dem ersten Anschluss 320 und dem zweiten Anschluss 330 angeordnet ist.

Auch umfasst der Hydraulikanschluss 300 eine Nut 313, die umlaufend an einer Innenwand des Rohrstücks 310 angeordnet ist, wobei der Hydraulikanschluss 300 ausgestaltet ist, im Rohrstück 310 einen Rückflussverhinderer, z.B. einen Rückflussverhinderer 200, aufzunehmen, so dass die Nut 313 zumindest einen Teil des Rückflussverhinderers 200 umgreift. Die Nut 313 ist unten in Fig. 9 im Verhältnis 2:1 vergrößert dargestellt.

Der Hydraulikanschluss 300 ist in eine Gerätewand 600 eingebaut. Dabei liegt der Anschlag 340 an einer Außenwand der Gerätewand 600 an. Der Anschlag 340 umfasst eine weitere Nut 342 zur Aufnahme einer Dichtung zur Abdichtung zwischen dem Hydraulikanschluss 300 und der Gerätewand 600.

Die gezeigte Ausführungsform umfasst zudem Bohrungen 343, mit Hilfe derer der Hydraulikanschluss 300 an der Gerätewand 600 befestigt werden kann. Vorzugsweise werden in die Bohrungen 343 noch Schraubhülsen eingebracht um ein definiertes und lange haltendes Anschraubergebnis erzielen zu können.

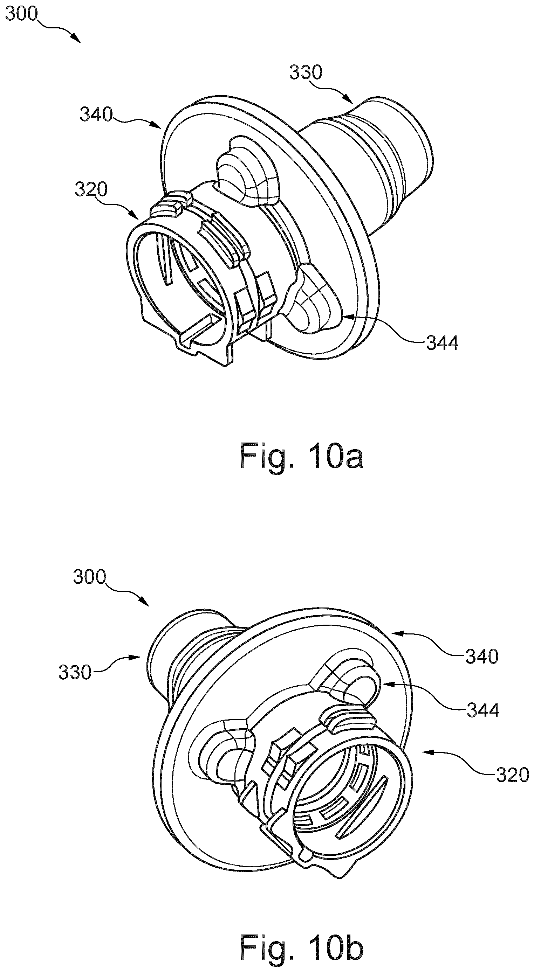

Fig. 10a zeigt eine schematische Darstellung zur Illustration des zweiten Ausführungsbeispiels des erfindungsgemäßen Hydraulikanschlusses 300 und Fig. 10b eine schematische Darstellung zur Illustration des zweiten Ausführungsbeispiels des erfindungsgemäßen Hydraulikanschlusses 300 aus einer anderen Perspektive. Insbesondere ist der Hydraulikanschluss 300 ohne die Gerätewand 600 gezeigt.

Es ist zu erkennen, dass der Anschlag 340 auf derdem ersten Anschluss 320 zugewandten Seite weitere Vorsprünge 344 aufweist, die insbesondere eine Stabilisierung des Hydraulikanschlusses 300 ermöglichen.

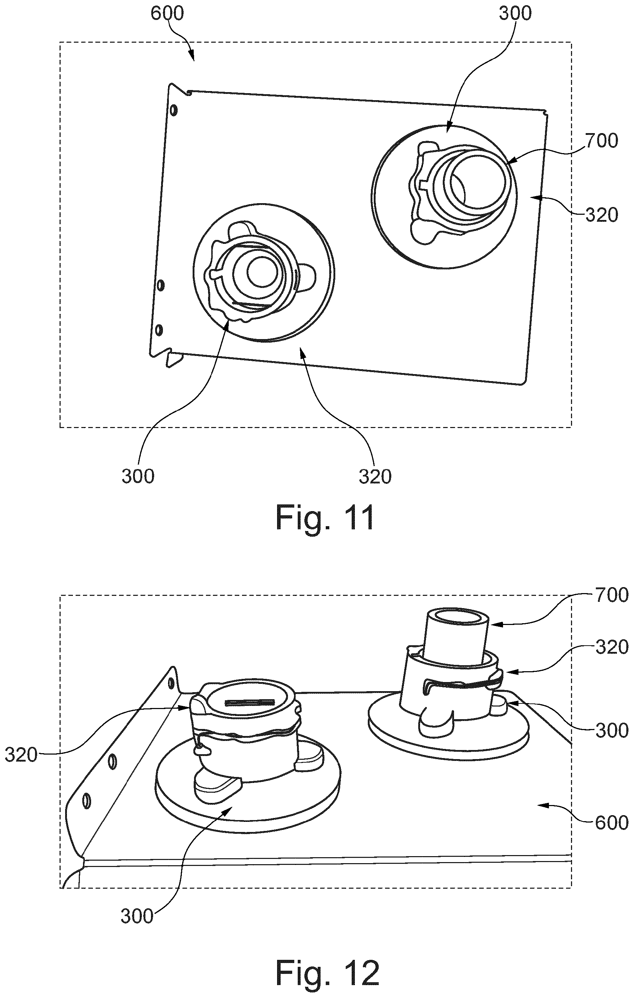

Fig. 11 zeigt eine schematische Darstellung zur Illustration einer Gerätewand 600 einer Wärmepumpe mit zwei erfindungsgemäßen Hydraulikanschlüssen 300 entsprechend dem zweiten Ausführungsbeispiel. Fig. 12 zeigt eine schematische Darstellung zur Illustration der Gerätewand 600 einer Wärmepumpe mit zwei erfindungsgemäßen Hydraulikanschlüssen 300 entsprechend dem zweiten Ausführungsbeispiel aus einer anderen Perspektive. Insbesondere ist in den Fig. 11 und 12 jeweils der erste Anschluss 320 zu erkennen, d.h. eine Außenseite der Gerätewand 600, wobei jeweils der zweite Anschluss hinter der Gerätewand 600 angeordnet ist. Der Hydraulikanschluss 300, der in den Fig. 11 und 12 rechts gezeigt ist, ist mit einem ersten Gegenanschluss 700 verbunden, der auch als Adapter verstanden werden kann.

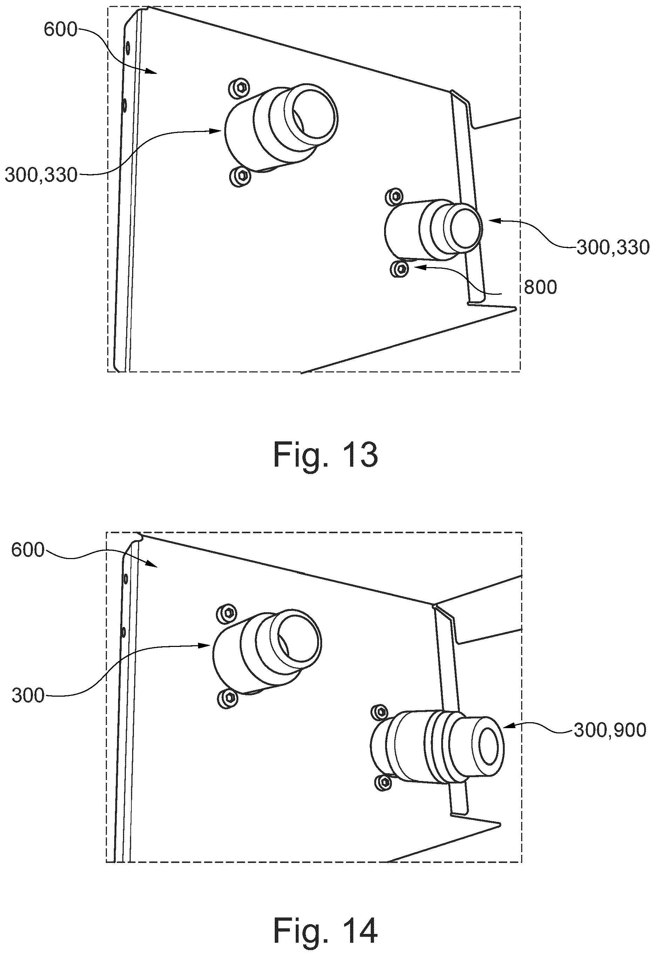

Fig. 13 zeigt eine schematische Darstellung zur Illustration der Gerätewand 600 einer Wärmepumpe mit zwei erfindungsgemäßen Hydraulikanschlüssen 300 entsprechend dem zweiten Ausführungsbeispiel aus einer weiteren Perspektive und Fig. 14 zeigt eine schematische Darstellung zur Illustration einer Gerätewand 600 einer Wärmepumpe mit zwei erfindungsgemäßen Hydraulikanschlüssen 300 entsprechend dem zweiten Ausführungsbeispiel und einen zweiten Gegenanschluss. In den Fig. 13 und 14 sind jeweils die zweiten Anschlüsse 330 zu erkennen, d.h. die Innenseite der Gerätewand 600, wobei jeweils der erste Anschluss hinter der Gerätewand 600 angeordnet ist. Der Hydraulikanschluss 300, der in Fig. 14 rechts gezeigt ist, ist hier mit einem zweiten Gegenanschluss 900 verbunden, der auch als Adapter verstanden werden kann

Zudem sind die gezeigten Hydraulikanschlüsse 300 mit Hilfe von Bohrungen 343 an der Gerätewand 600 befestigt, wobei dann in der Gerätewand 600 drei Öffnungen zum Durchführen von Schrauben 800 vorgesehen sind.

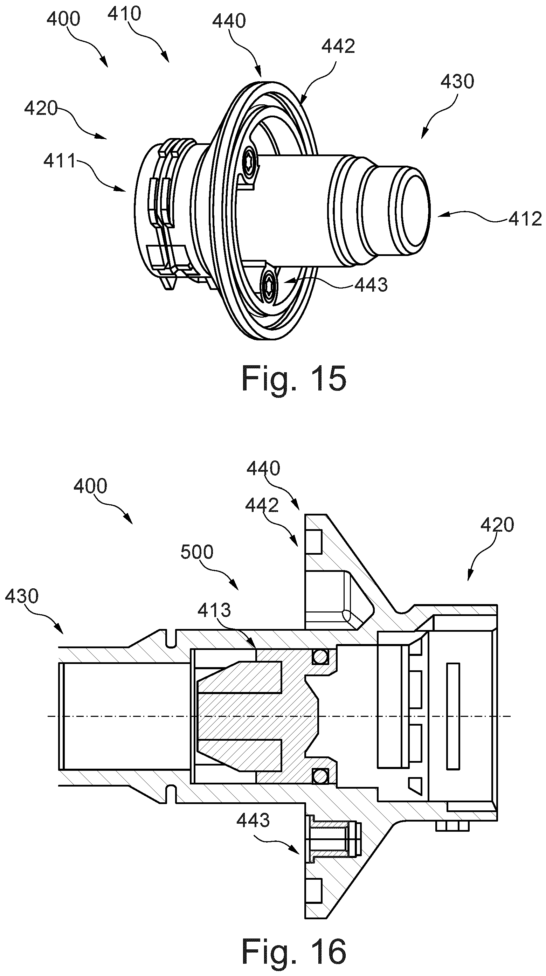

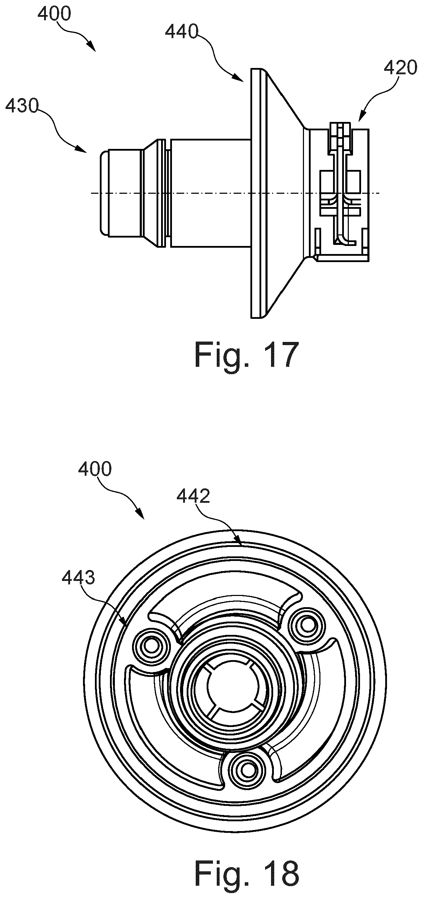

Fig. 15 zeigt eine schematische Darstellung zur Illustration eines dritten Ausführungsbeispiels des erfindungsgemäßen Hydraulikanschlusses. Fig. 16 zeigt eine schematische Schnittansicht zur Illustration des dritten Ausführungsbeispiels des erfindungsgemäßen Hydraulikanschlusses. Fig. 17 zeigt eine schematische Darstellung zur Illustration des dritten Ausführungsbeispiels des erfindungsgemäßen Hydraulikanschlusses von der Seite. Fig. 18 zeigt eine weitere schematische Darstellung zur Illustration des dritten Ausführungsbeispiels des erfindungsgemäßen Hydraulikanschlusses.

Der Hydraulikanschluss 400 umfasst ein Rohrstück 410 zum Durchleiten eines Fluids, wobei das Rohrstück 410 eine erste Öffnung 411 und eine zweite Öffnung 412 aufweist. Weiter umfasst der Hydraulikanschluss 400 einen ersten Anschluss 420, der die erste Öffnung 411 umgibt, zum Verbinden mit einem ersten Gegenanschluss, einen zweiten Anschluss 430, der die zweite Öffnung 412 umgibt, zum Verbinden mit einem zweiten Gegenanschluss und einen Anschlag 440, der das Rohrstück 410 umgibt, wobei der Anschlag 440 zwischen dem ersten Anschluss 420 und dem zweiten Anschluss 430 angeordnet ist.

Weiter umfasst der Hydraulikanschluss 400 eine Nut 413, die umlaufend an einer Innenwand des Rohrstücks 410 angeordnet ist. Der Hydraulikanschluss 400 ist ausgestaltet, im Rohrstück 410 einen Rückflussverhinderer, z.B. den Rückflussverhinderer 200 oder einen Rückflussverhinderer 500, aufzunehmen, so dass die Nut 413 zumindest einen Teil des Rückflussverhinderers 200 umgreift. Insbesondere kann der Rückflussverhinderer 200 oder 500 von außen in den Hydraulikanschluss 400 eingesteckt werden.

Auch der Hydraulikanschluss 400 weist Bohrungen 443 auf, durch die der Hydraulikanschluss 400 an eine Gerätewand einer Wärmepumpe befestigt werden kann, z.B. mit Hilfe von Schrauben.

Der Hydraulikanschluss 400 umfasst zudem eine weitere Nut 442 auf einer dem zweiten Anschluss 430 zugewandten Seite, wobei in der weiteren Nut 442 eine Dichtung, insbesondere ein O-Ring angeordnet ist. Die weitere Nut 442 liegt in einem zusammengebauten Zustand mit einer Gerätewand an der Gerätewand an.

In der gezeigten Ausführungsform weist der Hydraulikanschluss 400 auf der dem ersten Anschluss zugewandten Seite des Anschlags 440 eine angeschrägte Oberfläche auf. Zudem ist ein Bereich des Hydraulikanschlusses um das Rohrstück 410 ausgespart, um Einfallstellen zu verhindern.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

Es folgen weitere Überlegungen zu der Erfindung:
Das Anschlussfeld von Wärmepumpen, insbesondere von außenaufgestellten Wärmepumpen soll für das Fachpersonal, die die Wärmepumpe installieren sollen, übersichtlich und einfach zugänglich sein, damit die Installationszeit so gering wie möglich ausfällt. Teil des Anschlussfeldes ist der Anschluss des hydraulischen Vor- und Rücklaufes. Hierfür ist der erfindungsgemäße Hydraulikanschluss vorgesehen und eingerichtet.

Der erfindungsgemäße Hydraulikanschluss ermöglicht einen festen Sitz im Gerätegehäuse, d.h. einer Gerätewand, und eine einfache Adaptierung z.B. der Verrohrung zwischen einem Innen- und einem Außenmodul der Wärmepumpe. Eine Kraftübertragung von außen nach innen wird dabei bevorzugt unterbunden. Zusätzlich soll im hydraulischen Rücklauf die Option gegeben sein, mit geringem Aufwand einen Rückflussverhinderer einzubringen.

Die Erfindung bezieht sich auf einen Hydraulikanschluss oder Stuzen, der in eine Gerätewand der Wärmepumpe gefügt werden kann. Die Gerätewand ist dabei bevorzugt ein Blech. In einer weiteren Ausgestaltung ist die Gerätewand ein Thermoformteil aus Kunststoff.

In einer bevorzugten Ausführungsform umfasst der Hydraulikanschluss zumindest einen Steckanschluss (erster Steckanschluss) zur einfachen Installation der Anschlussverrohrung. Besonders bevorzugt ist der Steckanschluss ein bereits bekannter Steckanschluss, zum Beispiel ein VDA-Anschluss/VDA-Stutzen.

Der Steckanschluss ist derart zu der Gehäusewand angeordnet, dass in einem zusammengebauten Zustand ein Teil des Hydraulikanschlusses außerhalb der Wärmepumpe liegt und für das Fachpersonal zugänglich ist (erster Anschluss). Der andere Teil liegt innerhalb der Wärmepumpe und ist nur bei Öffnung des Wärmepumpengehäuses, insbesondere des Kältekreises, zugänglich (zweiter Anschluss).

Der erste Anschluss, d.h. der äußere Anschluss, des Hydraulikanschlusses beschreibt vorzugsweise die Geometrie einer VDA-Kupplung und ermöglicht den Anschluss entweder eines entsprechend ausgeformten Kupferrohres oder eines passenden VDA-Steckers.

Der Anschlag liegt im zusammengebauten Zustand des Hydraulikanschlusses in die Gehäusewand an der Gehäusewand an, gegen den der Hydraulikanschluss von außen geschoben wird. Optional kann eine Dichtung zwischen Hydraulikanschluss und Gehäusewand vorgesehen sein. Dazu ist es bevorzugt, dass der Anschlag eine weitere Nut aufweist. Die Dichtung kann bspw. als O-Ring ausgeführt werden, kann aber auch bereits im Bauteil integriert sein (Stichwort: Mehrkomponentenspritzguss). Die optionale Verwendung von Dichtungen ermöglicht es, Dichtigkeitsanforderungen zu erfüllen.

Der bevorzugte Vorsprung, der zum Beispiel als Sechskant ausgestaltet sein kann, ermöglicht eine definierte Positionierung des Hydraulikanschlusses in der Gerätewand und erfüllt die Funktion einer Verdrehsicherung. Mittels der optionalen Überwurfmutter wird der Hydraulikanschluss gegen die Gerätewand fixiert. Der Vorsprung und die Überwurfmutter können auch geometrisch anders ausgeführt sein, als in den obigen Figuren gezeigt, z.B. um eine Verschraubung oder ein Verrasten zu ermöglichen. Zumindest soll der Hydraulikanschluss, beispielsweise über den Vorsprung und/oder die Überwurfmutter, ausgestaltet sein, einen Form- und/ oder einen Stoffschluss zwischen dem Hydraulikanschluss und der Gerätewand zu erreichen.

Der zweite Anschluss, d.h. der innere Anschluss, kann als regulärer Schlauchstutzen ausgeführt sein, kann allerdings auch geometrisch anders geformt sein, um z. B. der Geometrie des VDA-Stutzens oder dem Stutzen des MFGs zu entsprechen.

Der Hydraulikanschluss ist ausgestaltet, einen Rückflussverhinderer aufzunehmen, wobei der Rückflussverhinderer beispielsweise ein Ventil sein kann. Zum Einsetzen umfasst der Hydraulikanschluss eine Nut. Die Nut ist vorzugsweise im Bereich des zweiten Anschlusses vorgesehen. Der Rückflussverhinderer weist vorzugsweise Rastmittel, wie Haken, auf, um in die Nut einzurasten. So kann eine Positionsgenauigkeit sichergestellt werden. Zusätzlich verhindert die Nut ein Herausrutschen des Rückflussverhinderers, da sie einen Anschlag bildet, hinter den sich die Rastmittel des Rückflussverhinderers verrasten.

Der Innendurchmesser im Bereich des zweiten Anschlusses fällt vorzugsweise größer aus als die allgemeine Nennweite der Hydraulik, um Strömungsprobleme und Druckverluste in der Blechdurchführung zu minimieren.

Der Grundkörper des Hydraulikanschlusses mit Rückflussverhinderer ist geometrisch identisch zu der Variante ohne Rückflussverhinderer, so dass nur der Rückflussverhinderer zusätzlich eingebracht werden muss.

Der Rückflussverhinderer ermöglicht die Durchströmung nur in eine Richtung, bevorzugt vom Äußeren des Geräts ins Innere. Im Falle, dass die Wärmepumpe abgeschaltet ist, d.h. kein Volumenstrom vorhanden ist, schließt der Rückflussverhindererr und verhindert ein Rückströmen des Wassers vom Inneren des Gerätes in den Heizungsbereich im Gebäude. Dies ist Teil des Sicherheitskonzeptes und ermöglicht z.B. die stark höhenverschiedene Positionierung Wärmepumpe - Speicher (Wärmepumpe auf dem Dachboden, Speicher im Keller) oder bei der Kaskadierung. Im Havariefall kann so kein mit Kältemittel vermischtes Wasser (Worst Case) ins Gebäude gelangen.

Falls die Wärmepumpe komplett entleert werden soll, ist dies von außen durch manuelles Betätigen des Rückflussverhinderers, beispielsweise mit einem Schraubendreher, optimaler Weise mit angepasstem Zubehör, möglich.

Der Hydraulikanschluss, der auch als Blechdurchführung verstanden werden kann, kann aus unterschiedlichen Materialien bestehen und mit verschiedenen Verfahren hergestellt werden, z.B. als Messing-Drehteil. Der Hydraulikanschluss muss nicht nur aus einem Material hergestellt sein, sondern kann aus zwei oder mehr Materialien bestehen. Zusätzlich kann der Hydraulikanschluss als ein Bauteil oder als Baugruppe erstellt werden. Variierende Materialien und Geometrien, bspw. mit unterschiedlichen Nennweiten, d. h. Innendurchmessern, ermöglichen die Verwendung mit variierenden Volumenströmen und in unterschiedlichen Geräten, insbesondere Wärmepumpen.

Die Erfindung bezieht sich auch auf eine Wärmepumpe mit einer Gerätewand und bevorzugt zwei Hydraulikanschlüssen.

Vorzugsweise sind die Hydraulikanschlüsse verschieden farbig eingefärbt, bspw. rot (Vorlauf) und blau (Rücklauf), um die Installation für das Fachpersonal weiter zu erleichtern. Die Farbcodierung kann zusätzlich verwendet werden oder eine andere, möglicherweise zusätzliche Farbcodierung kann verwendet werden, um optisch die Varianten mit/ohne Rückflussverhinderer zu differenzieren und Fehlerquellen zu reduzieren.

Konkret ist der Hydraulikanschluss zur Verbindung einer Wärmepumpe und Heizungsperipherie vorgesehen und eingerichtet und soll eine möglichst einfache und wiederholungssichere Verbindung gewährleisten. Dabei kann der Hydraulikanschluss die Funktion "Rückfluss verhindern" aufweisen oder nicht. Die Verwendung in weiteren Geräten (Speicher, Innenaufstellung) ist möglich.

Die Erfindung bezieht sich auf einen Hydraulikanschluss für eine Wärmepumpe, wobei der Hydraulikanschluss aufweist, (i) ein Rohrstück zum Durchleiten eines Fluids, wobei das Rohrstück eine erste Öffnung und eine zweite Öffnung aufweist, (ii) einen ersten Anschluss, der die erste Öffnung umgibt, zum Verbinden mit einem ersten Gegenanschluss, (iii) einen zweiten Anschluss, der die zweite Öffnung umgibt, zum Verbinden mit einem zweiten Gegenanschluss, (iv) einen Anschlag, der das Rohrstück umgibt, wobei der Anschlag zwischen dem ersten Anschluss und dem zweiten Anschluss angeordnet ist, und (v) eine Nut, die umlaufend an einer Innenwand des Rohrstücks angeordnet ist, wobei der Hydraulikanschluss ausgestaltet ist, im Rohrstück einen Rückflussverhinderer aufzunehmen, so dass die Nut zumindest einen Teil des Rückflussverhinderers umgreift.

## Patentansprüche

1. Hydraulikanschluss (100, 300, 400) für eine Wärmepumpe, wobei der Hydraulikanschluss (100, 300, 400) aufweist,
ein Rohrstück (110, 310, 410) zum Durchleiten eines Fluids, wobei das Rohrstück (110, 310, 410) eine erste Öffnung (111, 311, 411) und eine zweite Öffnung (112, 312, 412) aufweist,
einen ersten Anschluss (120, 320, 420), der die erste Öffnung (111, 311, 411) umgibt, zum Verbinden mit einem ersten Gegenanschluss (700),
einen zweiten Anschluss (130, 330, 430), der die zweite Öffnung (112, 312, 412) umgibt, zum Verbinden mit einem zweiten Gegenanschluss (900),
einen Anschlag (140, 340, 440), der das Rohrstück (110, 310, 410) umgibt, wobei der Anschlag (140, 340, 440) zwischen dem ersten Anschluss (120, 320, 420) und dem zweiten Anschluss (130, 330, 430) angeordnet ist, und
eine Nut (113, 313, 413), die umlaufend an einer Innenwand des Rohrstücks (110, 310, 410) angeordnet ist, wobei der Hydraulikanschluss (100, 300, 400) ausgestaltet ist, im Rohrstück (110, 310, 410) einen Rückflussverhinderer (200, 500) aufzunehmen, so dass die Nut (113, 313, 413) zumindest einen Teil des Rückflussverhinderers (200, 500) umgreift.

2. Hydraulikanschluss (100, 300, 400) nach Anspruch 1, wobei innerhalb des Rohrstücks (110, 310, 410) ein Rückflussverhinderer (200, 500) angeordnet ist, wobei der Rückflussverhinderer (200, 500) wenigstens ein Rastmittel (210) aufweist, wobei die Nut (113, 313, 413) zumindest das Rastmittel (210) umgreift.

3. Hydraulikanschluss (100) nach einem der Ansprüche 1 und 2, wobei der Anschlag (140) auf einer dem zweiten Anschluss (130) zugewandten Seite um das Rohrstück (110) einen Vorsprung (141) aufweist, der in einer Ebene senkrecht zu einer Durchleitrichtung des Rohrstücks (110) eine mehreckige, bevorzugt sechseckige, Form aufweist.

4. Hydraulikanschluss (100) nach einem der vorherigen Ansprüche, wobei der Hydraulikanschluss (100) auf einer dem zweiten Anschluss (130) zugewandten Seite um das Rohrstück (110) eine Überwurfmutter (150) umfasst, die in einer Durchleitrichtung des Rohrstücks (110) bewegbar angeordnet ist.

5. Hydraulikanschluss (300, 400) nach einem der vorherigen Ansprüche, wobei der Hydraulikanschluss (300, 400) auf einer dem zweiten Anschluss (330, 430) zugewandten Seite des Anschlags (340, 440) wenigstens eine, bevorzugt wenigstens drei, Bohrungen (343, 443) aufweist.

6. Hydraulikanschluss (300, 400) nach einem der vorherigen Ansprüche, wobei der Anschlag (340, 440) eine weitere Nut (342, 442) auf einer dem zweiten Anschluss (330, 430) zugewandten Seite aufweist, wobei zumindest teilweise in der weiteren Nut (342, 442) eine Dichtung angeordnet ist, wobei die Dichtung bevorzugt einen O-Ring umfasst.

7. Hydraulikanschluss (100, 300, 400) nach einem der vorherigen Ansprüche, wobei der erste Anschluss (120, 320, 420) einen Steckanschluss, bevorzugt einen VDA-Anschluss, und/oder einen Klemmanschluss aufweist, der ausgestaltet ist, mit einem Rohr, insbesondere einem Kupferrohr, verbunden zu werden und/oder wobei der zweite Anschluss (130, 330, 430) einen Steckanschluss, bevorzugt einen VDA-Anschluss oder einen Schlauchanschluss aufweist.

8. Wärmepumpe mit einer Gerätewand (600), wobei in der Gerätewand (600) wenigstens ein Hydraulikanschluss (100, 300, 400) nach einem der Ansprüche 1 bis 7 angeordnet ist, wobei der Anschlag (140, 340, 440) bevorzugt außerhalb der Wärmepumpe angeordnet ist.

9. Wärmepumpe nach Anspruch 8, wobei zwischen der Gerätewand (600) und dem Hydraulikanschluss (100, 300, 400) ein Formschluss und/oder Stoffschluss vorliegt.

10. Wärmepumpe nach einem der Ansprüche 8 und 9, wobei die Wärmepumpe eine Hydraulik mit einer Nennweite aufweist, wobei ein Innendurchmesser des Rohrstücks (110, 310, 410) im Bereich des zweiten Anschlusses (130, 330, 430) größer ist als die Nennweite der Hydraulik.
